# EUROPEAN PATENT SPECIFICATION

(11) **EP 3 943 886 B1**
(45) Date of publication and mention of the grant of the patent: **01.10.2025**
(21) Application number: 21183950.1
(22) Date of filing: 06.07.2021
(51) Int. Cl.: G01C 21/12, G01C 21/16, G01C 21/20

(54) **METHOD AND SYSTEM FOR LOCALIZATION INSIDE A BUILT ENVIRONMENT**
VERFAHREN UND SYSTEM ZUR LOKALISIERUNG INNERHALB EINER BEBAUTEN UMGEBUNG
PROCÉDÉ ET SYSTÈME DE LOCALISATION À L'INTÉRIEUR D'UN ENVIRONNEMENT BÂTI

(30) Priority: 22.07.2020 IT 202000017722
(43) Date of publication of application: 26.01.2022
(73) Proprietor: Teseo S.r.l., 16151 Genova (IT); UNIVERSITA' DEGLI STUDI DI GENOVA, 16126 Genova (IT)
(72) Inventor: BERTOCCI, Daniel, 16032 Camogli (IT); MOTOLESE, Carola, 17100 Savona (IT); SCALMATO, Antonello, 16126 Genova (IT); SPERINDE', Alessandro, 16126 Genova (IT); MASTROGIOVANNI, Fulvio, 16126 Genova (IT); GIUNI, Antonella, 16126 Genova (IT)
(74) Representative: Karaghiosoff, Giorgio Alessandro

(56) References cited:
- EP-A1- 2 734 110
- EP-B1- 2 734 110
- GB-A- 2 578 495
- US-A1- 2018 328 753

## Description

### TEXT OF DESCRIPTION

The present invention relates to a method and a class of systems for the topological localization of people or objects that are moved by one or more people in a built environment.

Location systems are generally based on wireless communication technologies involving one or more mobile devices and one or more fixed devices. At the current state of the art, the most used technologies are the following, or in any case they are based on similar principles:
- Global Positioning System (GPS): It consists of a series of satellites (transmitters in geostationary orbit) that periodically transmit information to mobile receivers on the earth's surface. The receivers calculate their position on the basis of the coordinates of the satellites with respect to a defined reference system, and the accuracy achieved also increases as the number of references to the satellites increases. It is necessary to have at least three satellite references to calculate the position.
- Global System for Mobile Communications (GSM): This is a series of location services offered by mobile telephone operators. Their operation is based on the use of the same antenna network that provides the telephony service. The position can be calculated both in the mobile device and by the service provider, since both terrestrial and mobile device antennas can function as transmitters or receivers. There are several parameters used for position calculation, such as signal arrival time, angles of incidence, tri-lateration or multi-lateration of signals or cells to which they belong.
- Assisted GPS (AGPS): This is a hybrid technology usually employed in mobile devices that have a GPS receiver. It uses both signals provided by satellites and those provided by mobile phone networks. It is used in two circumstances: when the GPS signal is not sufficient for localization, for example due to the low number of references to satellites, and when the mobile device starts performing the GPS function, i.e. the moment when the device assumes the its position in the mobile phone network to assist the GPS signal.

These technologies and those based on similar principles are often difficult to use in built environments, where the signals do not have sufficient power and where the required localization accuracy is usually greater than that obtainable with these technologies and those based on similar principles, for example for discriminate the position of a person or an object moved by one or more people to whom the mobile device is mechanically coupled within zones, areas, or rooms.

GPS is operationally limited to outdoor environments, where signals from satellites can be received, and therefore cannot be used within the built environment, such as tunnels, homes or offices.

GSM and similar technologies can only be used in the presence of mobile phone coverage. Furthermore, the accuracy obtained is in non-optimal nominal conditions, with error ranges that could make these technologies non-operational.

AGPS, being a combination of the other two aforementioned technologies, suffers from similar problems in principle.

Patent application publication US 2018/328753 A1 discloses a local location mapping method and system to create a map from location data and orientation data. In particular, the present system and method use dead reckoning deltas obtained from inertial and orientation sensors to interpolate a travel path using travel path features.

To overcome these limitations, there are location systems specifically designed for applications in a built environment, which use technologies such as Wi-Fi, ZigBee, Bluetooth, Ultra Wide Band (UWB), Radio Frequency IDentification (RFID), or based on principles similar, to determine the position of a person or an object moved by one or more people through an exchange of information between a mobile device mechanically coupled to that person or object and a multiplicity of fixed devices arranged within the built environment , for example in zones, areas or rooms, in which to determine the position of that person or object.

These technologies do not guarantee satisfactory performance in terms of location accuracy in environments hostile to radio transmissions, i.e. environments where there are numerous signal obstacles such as other objects, furniture, walls, or other people. A typical example of an environment hostile to radio transmissions is constituted by shipbuilding areas or areas where there are numerous ferrous objects, such as shipyards. Another typical example of an environment hostile to radio transmissions consists of areas or areas where there are critical machinery for assisting people, such as hospitals.

The limitations of the aforementioned technologies and those based on similar principles are also due to the fact that they mostly use tri-lateration or multi-lateration procedures for calculating the position of a mobile device mechanically coupled to the person or to an object moved by one or more people, whose position is to be determined by exchanging information with a multiplicity of fixed devices with respect to a given reference system, such as satellites, antennas for mobile telephones, or environmental sensors, for which the communication between all the devices that contribute to the localization process must be continuous and reliable according to the state of the art. In fact, the presence of an obstacle between the mobile device and only one of the fixed devices is sufficient for the localization to fail or not have adequate accuracy.

The present invention aims at overcoming the disadvantages of the currently known localization systems listed above, and potentially others not mentioned but with similar or derived characteristics, with a system according to claim 1.

With "voluntary movement activity" or "voluntary movement" we mean any instance of curve in space that corresponds to a path between two points of interest, to be understood for example as zones, areas, or rooms within an environment built.

The invention therefore provides for an algorithm consisting of a classifier or an expert machine-learning system that exploits an initial database describing movement experiences obtained from empirical statistical measurements of people who move in an environment and who carry out certain daily activities, where said classifier, when applied to a specific person (or moving object) acquires an informative set of conditions of experience of that person which are specifically associated with daily voluntary actions and on the basis of this experience evaluates the measurements coming from said at least one differential sensor to detect whether or not these measurements are compliant with voluntary actions as described by the information set previously built.

The classification of movements as voluntary or not therefore allows the activation of actions conditional on the result of this classification algorithm e.g. the activation of one or more alarms in the event of involuntary movement or the execution of any operational command known to the skilled in the art.

In an advantageous configuration of the system, these parameters and these predefined models can be customized thanks to a learning or calibration phase in which information is collected on the particularities of differential movement of the person or object moved by one or more people that need to be topologically localized. , corresponding to conditions of usual behavior in following a certain path, being available a classification algorithm in the form of an inductive or deductive algorithm, such as a computational model based on a neural network or other approximation algorithms capable of performing learning cycles during current usage.

By way of example, the inventors were able to observe how, thanks to the use of inductive algorithms, for example based on neural networks, it is possible to recognize the paths of a person or an object moved by one or more people in an environment constructed from the analysis of only the differential movement data of that person or object, without the need to use references, whether internal to the environment or external, with which to perform tri-lateration or multi-lateration as in known systems . All this with an obvious benefit in terms of simplicity of installation and use of a localization system and cost reduction. Furthermore, all this also for the benefit of a need, which emerges in particular examples of built environments such as hospitals or construction sites, relating to the tracking of unsupervised objects.

To this end, the invention provides, in one embodiment, to equip the person or object moved by one or more people to be located topologically within the built environment with at least one differential motion sensor such as, for example, a accelerometer, a gyroscope, a magnetometer or sensors with similar characteristics, and a device capable of collecting and sending to a processing system, even in batches and in deferred time, the differential movement information so that the system according to the invention is able to estimate the path taken by that person or object, for example by means of inductive algorithms, for example based on neural networks or other approximation algorithms. All this after a learning or calibration phase that allows the system to memorize the movements made by that person or object in following pre-established paths within the built environment in which the topological localization process takes place.

According to another aspect, the invention relates to a method according to claim 9.

According to an improvement, the step of customizing the execution models of voluntary movement activities is envisaged through a learning or calibration phase in which information is collected on the particularities of differential movement of the person or object moved by one or more corresponding persons to be monitored. under conditions of usual behavior in following the same path, the method providing for the execution of a recognition algorithm in the form of an inductive or deductive algorithm, such as a computational model based on a neural network or other approximation algorithms capable of performing cycles learning during current use.

Further improvements are the subject of the dependent claims.

These and other characteristics and advantages of the present invention will become clearer from the following description of some executive examples illustrated in the attached drawings in which:
Figure 1 shows four points of interest (PI) labeled PI0, PI1, PI2, PI3, within a map of a built environment with possible paths between them;
Figure 2 shows the same map in which an intermediate PI (PI1) is highlighted, through which it is necessary to transit in order to carry out both the path from PI0 to PI2, and the reverse path from PI2 to PI0;
Figure 3 shows an example of a conceptual scheme of the topological localization system object of the present invention, in which relevant functional blocks are highlighted with labels S1, S1 ', S2, T3, R4, E5, A10 and A20;
Figure 4 shows a variant of the diagram in Figure 3 in which the use of an intermediate interface device, labeled I103, is envisaged, such as for example a smartwatch or similar wearable devices, between sensors and transmission units;
figure 5 shows a further communication architecture, in which possible instances of relevant functional modules are highlighted with the labels T3, R4, I103;

Before proceeding to the description of the system according to a possible embodiment of the invention, it is necessary to introduce some definitions.

A "point of interest" (PI) means an area or an area or a room or similar within a built environment in which a person performs an activity that does not cause that person's position to change significantly , or in which there is an object not moved by any person. For simplicity, we can indicate with IPI the set of all points of interest in this environment. Each PI in the IPI can be assigned a consecutive integer identifier starting from zero, for example PI0, PI1, and so on.

With "path" (P) we mean any curve in space that joins two points of interest PIi and PIj in IPI, with i and j distinct, and that satisfies the following properties:
a) compliance with the structural constraints relating to the built environment in which the topological location process takes place, for which, for example, the curve cannot pass through walls or other structural obstacles between zones and / or areas and / or rooms;
b) piecewise regularity, for which the curve has no cusp points or corner points according to the common definition;
c) minimality of the length, for which given L the length of the curve and given L0 the length of the ideal curve between PIi and PIj, such that the path of this ideal curve satisfies the properties referred to in points a) and b), it must be that the difference between L and L0 must be less than an a priori definable threshold, such that the two distances are similar, as it is easy to observe how people tend to use an optimal path to reach a given PI, and in any case to move objects following this optimal path.

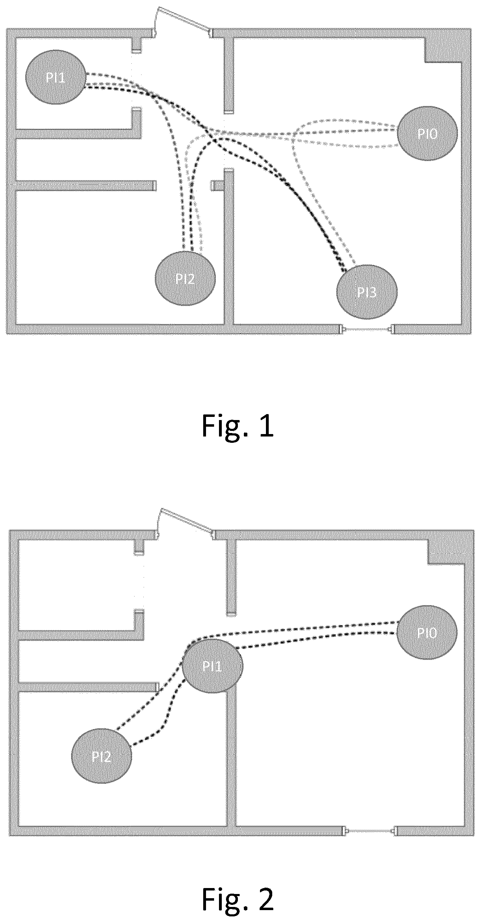

Given two points of interest PIi and PIj in IPI, with i and j distinct, it is possible to indicate with Pij the path that joins the point of interest PIi with the point of interest PIj. It is also possible to indicate with IP the set of all paths defined as described among all the IPs in IPI relating to the built environment in which the topological localization process is defined. A possible representation of various points of interest and paths is shown in figure 1. Given two points of interest PIi and PIj in IPI, with i and j distinct, it is assumed that there is always a path Pij that allows reaching PIj starting from PIi.

There could be built environments in which, in order to reach a given point of interest PIj in IPI starting from a given point of interest PIi in IPI, with i different from j, it is necessary to pass through another PIk in IPI, with different k from i and j, as highlighted in figure 2, and that therefore a path Pij in IP can be advantageously treated as the composition of two paths Pik and Pkj in IP. However, it is useful to distinguish the case in which PIk in IPI is a point of interest in which the person or object moved by one or more people settles for a certain time, or the case in which it corresponds to a simple point of occasional passage, and therefore the said Pij path must advantageously be considered distinct from the union of such Pik and Pkj.

Each P in IP can be assigned a consecutive integer identifier starting from zero, for example P0, P1, and so on. One possible way to do this is to list all the paths, sort them first by source, and then by destination.

Each path P in IP can be associated with at least a corresponding series of one or more differential movement parameters in a suitable sequence, such as the speed of variation of the position and / or the duration of this variation and / or the speed of variation of the direction and / or the duration of this variation.

By "voluntary movement activity" or "voluntary movement" is meant any instance of curve in space that corresponds to a path as defined above.

By "involuntary movement" we mean any instance of a curve in space that begins and ends in the same point of interest PIi in IPI, and which does not deviate significantly from it and in any case such as not to lead to a point of interest PIj in IPI, with i and j distinct.

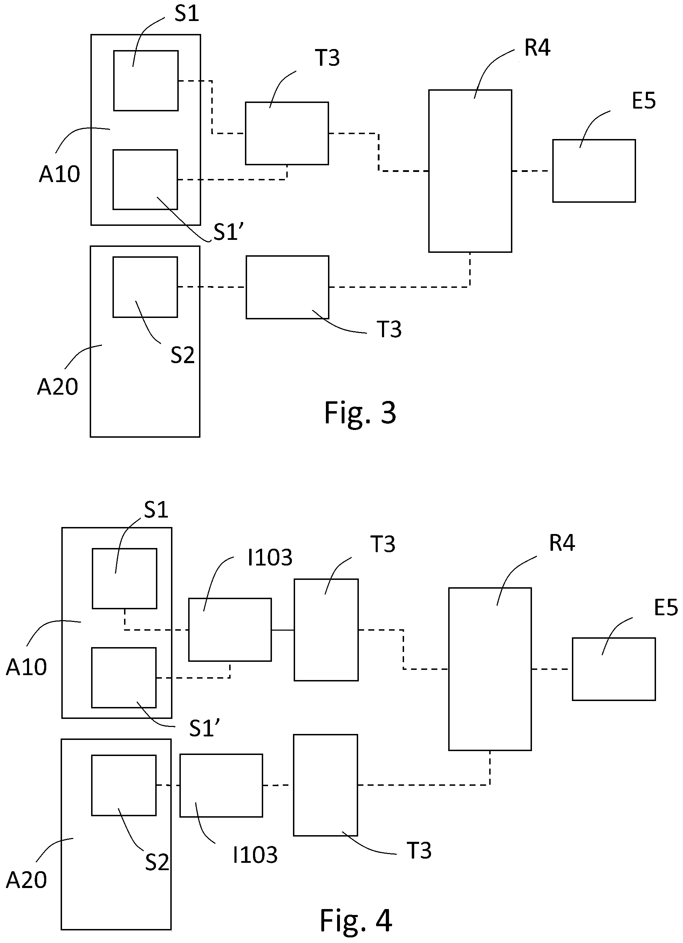

Figure 3 illustrates an example of a possible scheme of the topological localization system object of the present invention. This system can comprise one or more sensors S1, S1 ', S2, for detecting the differential movement of a person or of an object moved by one or more people, one or more units T3 for transmitting the differential movement information detected by the sensors S1, S1 ', S2, a receiving unit R4 and a processing unit E5. In the specific example shown in the figure, sensors S1 and S1 'are associated with a first person or first object moved by one or more people A10 while the sensor S2 is associated with a second person or second object moved by one or more people A20. It is obviously possible to consider any number of people or objects moved by one or more people, each associated with any number of sensors. In a common case, the person or object moved by one or more people are the only ones associated with a single sensor.

Sensors of a differential nature can for example be accelerometers, gyroscopes, magnetometers, or sensors based on similar principles. If these sensors are mechanically coupled to a person, these can also be advantageously but optionally supported by sensors of different types such as for example temperature or heartbeat sensors, or other biometric sensors.

Figure 4 shows a particular configuration of the system according to the present invention specific for a process of topological localization of a person in which there is a smartwatch or similar device I103 for the interface between the sensors S1, S1 ', S2, and the smartphone or similar device T3, to facilitate the data collection operation.

In the figures, the connections between the various components are shown in dashed lines to highlight how it can be wireless communications of any kind where appropriate, such as GSM, Wi-Fi, Zigbee, Bluetooth, UWB, RFID. However, this does not exclude that at least part of them are based on physical cables, such as the connection between the R4 receiving unit and the E5 processing unit or between the sensors S1, S1 ', S2, and the smartwatch or device. similar I103, and the smartphone or similar device T3, for example via USB, USB-C or HDMI.

An example of how the data can be collected to be processed is now described in the particular case of the configuration of the topological localization system shown in figure 4. The data acquisition is carried out through an algorithm that can be partially implemented on the smartwatch or device similar I103 and partly on the smartphone or similar device T3. A remote computer is used to collect information from all the devices used. The aforementioned algorithm can acquire data from sensors such as accelerometers, gyroscopes or magnetometers, or even from other sensors of a differential nature based on similar principles. Data of a different nature can also be acquired, such as those provided by temperature or heart rate sensors, or other biometric sensors. A particularly advantageous version of this algorithm can allow the simultaneous acquisition of data provided by sensors present on different devices, thus allowing to locate different people who can in turn also wear more than one device.

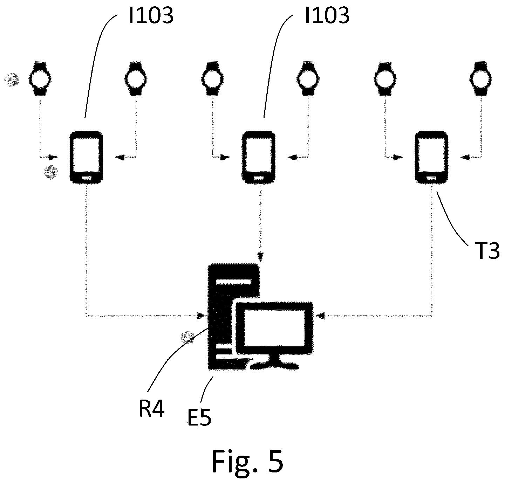

An example of a data communication protocol is now described in the particular case of the configuration shown in figure 4. In this example, the smartwatch or similar device I103 does not communicate directly with the R4 receiving unit, but with it via a smartphone or similar device. T3 according to the system architecture shown in Figure 5. Specifically, this smartwatch or similar device I103 could record data and transmit them to this smartphone or similar device T3 using wireless communication of any kind, such as GSM, Wi -Fi, Zigbee, Bluetooth, UWB, RFID. The smartphone or similar device T3 can communicate the data generated by it and those that can arrive from all other smartwatches or similar devices connected to I103 to the R4 receiving unit. On the remote computer E5 there is an algorithm that, starting from the collected data, is able to:
a) process the differential movement information received;
b) recognize the presence of a voluntary movement activity as opposed to an involuntary movement;
c) if there is a voluntary movement activity, recognize a path within the built environment by comparing differential movement parameters, such as the speed of variation of the position and / or the duration of this variation and / or the speed of variation of the direction and / or the duration of such variation, with models of execution of voluntary movement activities in a plurality of predefined paths in the same built environment, obtained for example by means of inductive algorithms.

In order to recognize the presence of voluntary movement activities, an algorithm is carried out as follows:
- consider a priori as involuntary movements all instances of curves in which the speed of variation of the position and / or the duration of this variation and / or the speed of variation of the direction and / or the duration of this variation are lower than a parameter threshold W suitably defined;
- consider a priori as involuntary movements all instances of curves shorter than a certain threshold parameter X suitably defined;
- distinguish between voluntary movement and involuntary movement activities using data deriving from accelerometers, gyroscopes or magnetometers, or also from other sensors of a differential nature based on similar principles, for example by comparisons with models of performing differential movement activities in a plurality of predefined paths in the built environment, obtained for example by means of inductive algorithms;
- in the case of a voluntary movement corresponding to a path Pij in IP, consider this Pij as a unique path and not in relation to any paths of the type Pik and Pkj, where k is distinct from i and j, and that the corresponding PIk in IPI corresponds to a simple occasional crossing point.

This implementation requires tc appropriately define the threshold parameter W, the threshold parameter X, and the choice and / or design of an inductive algorithm for the creation of the models and for the recognition of voluntary versus involuntary movements.

By way of example, the inventors were able to observe how, as regards the threshold parameter W, the choice of an inappropriate value by default could cause the recognition of motion activities that do not exist in reality, even of significant duration, while a value not excessively appropriate could come to exclude voluntary movement activities characterized by reduced speed of variation of the position and / or the duration of this variation and / or the speed of variation of the direction and / or the duration of such variation.

Again by way of example, the inventors were also able to observe how, as regards parameter X, the choice of an inappropriate value by default could cause the separation of a voluntary movement activity into several movement activities in the event that there was a brief interruption of the movement, while the choice of an inappropriate value for excess could cause the recognition as a single activity of voluntary movement of two activities that are actually separate, particularly if the waiting times between an activity and a other were too short.

Again by way of example, the inventors were also able to observe how through the use of inductive algorithms, for example based on neural networks, and in particular recurrent neural networks, it is possible to recognize the paths of a person or a moved object. by one or more people in an environment built from the analysis of only the differential movement data of the person or object themselves provided by a magnetometer mechanically coupled to that person or object, without the need to use references, whether internal to the environment or external, with which to carry out the tri-lateration or multi-lateration as in known systems.

Again by way of example, the inventors were also able to observe how, if inductive algorithms are used, for example based on neural networks, and in particular recurrent neural networks, the result of this algorithm at a certain moment also depends on the result. of this algorithm in the previous states, a property that is interesting because a result, for example a right turn in a path Pij, with distinct i and j, obtained by analyzing the differential movement data, could be identifying a different path, for example Pik, with distinct iek and distinct jek, if a left or a right turn was previously detected.

Again by way of example, the inventors were also able to observe how, if inductive algorithms are used, for example based on neural networks, and in particular recurrent neural networks, the algorithm is able to identify paths with different lengths, given the fact that different paths between different points of interest are typically characterized by different lengths.

Again by way of example, the inventors have also been able to observe how such inductive algorithms can advantageously make use of additional internal or external references to the environment, with which to perform tri-lateration or multi-lateration as in known systems, despite such references are not necessary, to the greater advantage of the accuracy of the topological localization procedure.

## Claims

1. Localization system of a person or an object moved by one or more people in a built environment, which system includes at least one differential sensor (S1, S1', S2) for detecting the differential movements of that person or object (A10, A20) in said environment, wherein said localization system comprises:
- at least one transmission unit (T3) of the differential movement information detected by the at least one sensor mechanically coupled to that person or object;
- at least one receiving unit (R4) of the differential movement information transmitted by this transmission unit (T3);
- at least one processing unit (E5) comprising a program in which the instructions for realizing a classification of said differential movement information as relating to a voluntary action of movement or to an involuntary action, are encoded, making the said processing unit (E5) suitable for carrying out the aforementioned classification, where this classification is provided in combination with the recognition of a path within said environment by comparing differential movement parameters, comprising the speed of variation of the position or the speed of change in direction, with models of execution of voluntary movement activities in a plurality of predefined paths in the same built environment
the recognition of the presence of voluntary movement activities being carried out by:
- considering a priori as involuntary movements all instances of curves in which the speed of variation of the position and/or the speed of variation of the direction are lower than a predefined parameter threshold W suitably defined;
- considering a priori as involuntary movements all instances of curves shorter than a certain predefined threshold parameter X suitably defined;
- distinguishing between voluntary movement and involuntary movement activities using data deriving from accelerometers, gyroscopes or magnetometers, for example by means of inductive algorithms;
- in the case of a voluntary movement corresponding to a path Pij, considering this Pij as a unique path and not in relation to any paths of the type Pik and Pkj, where k is distinct from i and j,
and that the corresponding PIk, which is a point of interest in the set of all points of interest in said environment, corresponds to a simple occasional crossing point,
wherein a path P is any curve in space that joins two points of interest PIi and PIj in the set of all points of interest in said environment, with i and j distinct, and that satisfies the following properties:
a) compliance with the structural constraints relating to the built environment in which the location process takes place, for which, for example, the curve cannot pass through walls or other structural obstacles between zones and/or areas and/or rooms;
b) piecewise regularity, for which the curve has no cusp points or corner points according to the common definition
c) minimality of the length, for which given L the length of a curve and given L0 a predefined length of an ideal curve between PIi and PIj, such that the path of this ideal curve satisfies the properties referred to in points a) and b), it must be that the difference between L and L0 must be less than an a priori definable threshold;
- if there is a voluntary movement activity, recognize a path within the built environment by comparing the differential movement parameters, comprising the speed of variation of the position and/or the speed of variation of the direction, with models of execution of voluntary movement activities in a plurality of predefined paths in the same built environment.

2. System according to claim 1, wherein at least a corresponding set of one or more differential movement parameters are associated with said path in a suitable sequence, comprising the speed of variation of the position along the path and/or the speed of change of direction along the path.

3. System according to claims 1 and 2, wherein the models of execution of voluntary movement activities are customized due to a training or calibration step in which information is acquired on peculiarities of differential movement of the person or object moved by one or more persons whose position requires to be determined, corresponding to conditions of usual behaviour when moving along a specific path, a classification algorithm being available as inductive or deductive algorithm based on neural network or other approximation algorithms capable to execute training cycles during the current use.

4. System according to any preceding claims, where said at least one differential sensor is coupled to the person or object moved by one or more persons to be localized within the built environment and where said at least one differential sensor is an accelerometer, gyroscope, magnetometer, capable of providing differential movement information, and/or where said at least one differential sensor is associated to an environmental and/or biometric sensor comprising temperature, heart rate, or other biometric sensors.

5. System according to one or more of preceding claims, wherein the occurrence of movements is recognised by comparing the speed of change in position and/or the speed of change in direction from the at least one sensor with one or more parameters, e.g. threshold parameters or indicators.

6. System according to claim 5, wherein a voluntary movement activity is recognized by analyzing data resulting from the accelerometers, the gyroscopes or the magnetometers by comparisons with models of execution of voluntary movement activities in a plurality of predefined paths in the built environment.

7. System according to one or more of preceding claims, wherein data resulting from the at least one sensor related to the rate of change in position and/or the duration of such change and/or the rate of change in direction and/or the duration of such change are analysed with inductive algorithms, particularly based on neural networks, and specifically recurrent neural networks, in order to detect voluntary movement activities.

8. System according to one or more of preceding claims, wherein the processing unit (E5) is configured to represent a topological map of the environment in which it is necessary to perform the localization process of a person or object moved by one or more persons, such map being made up of a set of points of interest corresponding to zones, areas, or rooms.

9. Method of localization of persons and/or objects moved by one or more persons in a built environment, each person or object being associated with at least one differential movement detection sensor of that person or object in said environment and **characterised by** comprising the following steps:
a) detection of differential motion by at least one sensor mechanically coupled to that person or object;
b) transmission of a signal containing such differential motion information by a transmission unit;
c) reception of the signal emitted by the transmission unit;
d) processing of the differential movement information received;
e) recognition of the presence of a voluntary movement activity versus an involuntary movement based on one or more threshold parameters or indicators by:
i. considering a priori as involuntary movements all instances of curves in which the speed of variation of the position and/or the speed of variation of the direction are lower than a predefined parameter threshold W suitably defined;
ii. considering a priori as involuntary movements all instances of curves shorter than a certain predefined threshold parameter X suitably defined;
iii. distinguishing between voluntary movement and involuntary movement activities using data deriving from accelerometers, gyroscopes or magnetometers, for example by means of inductive algorithms;
iv. in the case of a voluntary movement corresponding to a path Pij considering this Pij as a unique path and not in relation to any paths of the type Pik and Pkj, where k is distinct from i and j, and that the corresponding PIk, which is a point of interest in the set of all points of interest in said environment, corresponds to a simple occasional crossing point, wherein a path P is any curve in space that joins two points of interest PIi and PIj in the set of all points of interest in said environment, with i and j distinct, and that satisfies the following properties:
- compliance with the structural constraints relating to the built environment in which the topological location process takes place, for which, for example, the curve cannot pass through walls or other structural obstacles between zones and/or areas and/or rooms;
- piecewise regularity, for which the curve has no cusp points or corner points according to the common definition;
- minimality of the length, for which given L the length of a curve and given L0 a predefined length of an ideal curve between PIi and PIj, such that the path of this ideal curve satisfies the properties referred to in points a) and b), it must be that the difference between L and L0 must be less than an a priori definable threshold;
v. if there is a voluntary movement activity, recognizing of a path within the built environment by comparing differential movement parameters, comprising the speed of variation of the position and/or the speed of variation of the direction, with models of execution of voluntary movement activities in a plurality of predefined paths in the same built environment.

10. Method according to claim 9, wherein a step of customizing the models of execution of voluntary movement activities is provided through a learning or calibration phase in which information is collected on the particularities of differential movement of the person or object moved by one or more people whose topological location needs to be determined, corresponding to conditions of usual behavior in following a certain path, being available a classification algorithm in the form of an inductive or deductive algorithm, based on a neural network or other approximation able to perform learning cycles during current use.

11. Method according claims 9 or 10, wherein said inductive algorithm uses either internal environmental or external references, to perform tri-lateration or multi-lateration as in known systems, to improve the accuracy of the localization procedure.

## Patentansprüche

1. Lokalisierungssystem einer Person oder eines durch eine oder mehrere Personen in einer bebauten Umgebung bewegten Objekts, welches System mindestens einen Differenzsensor (S1, S1', S2) zum Detektieren der Differentialbewegungen der Person oder des Objekts (A10, A20) in der besagten Umgebung aufweist, wobei das Lokalisierungssystem umfasst:
- mindestens eine Sendeeinheit (T3) der Differentialbewegungsinformation, die durch den mindestens einen mit der Person oder dem Objekt mechanisch gekoppelten Sensor detektiert wird;
- mindestens eine Empfangseinheit (R4) der Differentialbewegungsinformation, die durch diese Sendeeinheit (T3) übertragen wird;
- mindestens eine Verarbeitungseinheit (E5) umfassend ein Programm, in welchem die Instruktionen zum Realisieren einer Klassifikation der besagten Differentialbewegungsinformation bezüglich einer willkürlichen Bewegungsaktion oder einer unwillkürlichen Aktion kodiert sind, wodurch die besagte Verarbeitungseinheit (E5) zum Durchführen der vorgenannten Klassifikation geeignet ist, wobei diese Klassifikation in Kombination mit der Erkennung eines Pfades innerhalb besagter Umgebung bereitgestellt wird durch Vergleich von die Geschwindigkeit der Positionsänderung oder die Geschwindigkeit der Richtungsänderung umfassenden Differentialbewegungsparametern mit Ausführungsmodellen willkürlicher Bewegungsaktivitäten in einer Vielzahl vordefinierter Pfade in derselben bebauten Umgebung,
wobei die Erkennung der Anwesenheit von willkürlichen Bewegungsaktivitäten durchgeführt wird durch:
- als unwillkürliche Bewegungen werden a priori alle Fälle von Kurven betrachtet, bei denen die Geschwindigkeit der Positionsänderung und/oder die Geschwindigkeit der Richtungsänderung niedriger sind als ein vordefinierter, geeignet festgelegter Parameterschwellenwert W;
- als unwillkürliche Bewegungen werden a priori alle Fälle von Kurven betrachtet, die kurzer sind als ein vordefinierter, geeignet festgelegter Schwellenwertparameter X;
- unterscheiden zwischen willkürlichen und unwillkürlichen Bewegungsaktivitäten unter Verwendung von Daten, die von Beschleunigungsmessern, Gyroskopen oder Magnetometern stammen, beispielsweise mittels induktiver Algorithmen;
- im Falle einer einem Pfad entsprechenden willkürlichen Bewegung, Betrachten dieser Pij als einzigartiger Pfad und nicht in Beziehung zu irgendeinem Pfad vom Typ Pik und Pkj, wobei k von i und j verschieden ist, und wobei der entsprechende Pik, der ein Punkt von Interesse in dem Satz aller Punkte von Interesse in der genannten Umgebung ist, einem einfachen gelegentlichen Kreuzungspunkt entspricht,
wobei ein Pfad P eine beliebige Kurve im Raum ist, die zwei Punkte von Interesse PIi und Pij in dem Satz aller Punkte von Interesse in der besagten Umgebung verbindet, wobei i und j verschieden sind, und folgende Eigenschaften erfüllt:
a) Einhaltung der baulichen Einschränkungen in Bezug auf die bebaute Umgebung, in der der topologische Lokalisierungsprozess stattfindet, wobei beispielsweise die Kurve nicht durch Wände oder andere bauliche Hindernisse zwischen Bereichen und/oder Flächen und/oder Räumen verlaufen darf;
b) Stückweise Regelmäßigkeit, bei der die Kurve gemäß der gängigen Definition keine Spitzen- oder Eckpunkte aufweist;
c) Minimalität der Länge, für die, vorausgesetzt L die Länge einer Kurve und L0 eine vordefinierte Länge einer idealen Kurve zwischen PIi und PIj ist, sodass der Verlauf dieser idealen Kurve die in den Punkten a) und b) angegebenen Eigenschaften erfüllt, die Differenz zwischen L und L0 kleiner als ein a priori definierbarer Schwellenwert sein muss;
- im Falle einer willkürlichen Bewegungsaktivität, Erkennen eines Pfades innerhalb der bebauten Umgebung durch Vergleich von die Geschwindigkeit der Positionsänderung und/oder die Geschwindigkeit der Richtungsänderung umfassenden Differentialbewegungsparametern mit Ausführungsmodellen willkürlicher Bewegungsaktivitäten in einer Vielzahl vordefinierter Pfade in derselben bebauten Umgebung.

2. System nach Anspruch 1, wobei mindestens ein entsprechender Satz von einem oder mehreren Differentialbewegungsparametern mit dem Pfad in einer geeigneten Reihenfolge zugeordnet ist, umfassend die Geschwindigkeit der Positionsänderung entlang des Pfads und/oder die Geschwindigkeit der Richtungsänderung entlang des Pfads.

3. System gemäß den Ansprüchen 1 und 2, wobei die Ausführungsmodelle für willkürliche Bewegungsaktivitäten durch einen Trainings- oder Kalibrierungsschritt benutzerdefiniert angepasst werden, in dem Informationen über die Besonderheiten der Differentialbewegung der Person oder des von einer oder mehreren Personen bewegten Objekts erfasst werden, deren Position zu ermitteln ist, entsprechend den Bedingungen des üblichen Verhaltens bei der Bewegung entlang eines bestimmten Pfades, wobei ein Klassifizierungsalgorithmus als induktiver oder deduktiver Algorithmus auf der Grundlage eines neuronalen Netzwerks oder anderer Approximationsalgorithmen verfügbar ist, die in der Lage sind, Trainingszyklen während der laufenden Verwendung auszuführen.

4. System gemäß einem der vorstehenden Ansprüche, wobei der mindestens eine Differentialsensor mit der Person oder dem von einer oder mehreren Personen bewegten Objekt gekoppelt ist, die innerhalb der bebauten Umgebung zu lokalisieren sind, und wobei der mindestens eine Differentialsensor ein Beschleunigungsmesser, ein Gyroskop oder ein Magnetometer ist, der/das in der Lage ist, Differentialbewegungsinformationen zu liefern, und/oder wobei der mindestens eine Differentialsensor mit einem Temperatursensor, Herzfrequenzsensor oder andere biometrische Sensoren umfassenden Umgebungs- und/oder biometrischen Sensor verbunden ist.

5. System gemäß einem oder mehreren der vorstehenden Ansprüche, wobei das Auftreten von Bewegungen durch Vergleichen der Geschwindigkeit der Positionsänderung und/oder der Geschwindigkeit der Richtungsänderung des mindestens einen Sensors mit einem oder mehreren Parametern, z. B. Schwellenparametern oder Indikatoren, erkannt wird.

6. System gemäß Anspruch 5, wobei eine willkürliche Bewegungsaktivität durch Analyse der Daten aus den Beschleunigungsmessern, den Gyroskopen oder den Magnetometern durch Vergleiche mit Ausführungsmodellen willkürlicher Bewegungsaktivitäten in einer Vielzahl vordefinierter Pfade in der bebauten Umgebung erkannt wird.

7. System gemäß einem oder mehreren der vorstehenden Ansprüche, wobei die von dem mindestens einen Sensor gelieferten Daten, die sich auf die Geschwindigkeit der Positionsänderung und/oder die Dauer dieser Änderung und/oder die Geschwindigkeit der Richtungsänderung und/oder die Dauer dieser Änderung beziehen, mit induktiven Algorithmen, insbesondere auf der Grundlage neuronaler Netze und speziell rekurrenter neuronaler Netze, analysiert werden, um willkürliche Bewegungsaktivitäten zu erkennen.

8. System gemäß einem oder mehreren der vorstehenden Ansprüche, wobei die Verarbeitungseinheit (E5) so konfiguriert ist, dass sie eine topologische Karte der Umgebung darstellt, in der der Lokalisierungsprozess einer Person oder eines von einer oder mehreren Personen bewegten Objekts durchgeführt werden muss, wobei diese Karte aus einem Satz von Punkten von Interesse besteht, die Bereichen, Flächen oder Räumen entsprechen.

9. Verfahren zur Lokalisierung von Personen und/oder von einer oder mehreren Personen in einer bebauten Umgebung bewegten Objekten, wobei jede Person oder jedes Objekt mit mindestens einem Sensor zur Erfassung der Differentialbewegung dieser Person oder dieses Objekts in der besagten Umgebung zugeordnet ist und das Verfahren durch die folgenden Schritte gekennzeichnet ist:
a) Erfassen einer Differentialbewegung durch mindestens einen Sensor, der mechanisch mit dieser Person oder diesem Objekt verbunden ist;
b) Übertragen eines diese Differentialbewegungsinformation enthaltenden Signals durch eine Sendeeinheit;
c) Empfangen des von der Sendeeinheit ausgesendeten Signals;
d) Verarbeiten der empfangenen Differentialbewegungsinformation,
e) Erkennen der Anwesenheit einer willkürlichen Bewegungsaktivität gegenüber einer unwillkürlichen Bewegung auf der Grundlage eines oder mehrerer Schwellenparameter oder Indikatoren durch:
i. als unwillkürliche Bewegungen werden a priori alle Fälle von Kurven betrachtet, bei denen die Geschwindigkeit der Positionsänderung und/oder die Geschwindigkeit der Richtungsänderung niedriger sind als ein vordefinierter, geeignet festgelegter Parameterschwellenwert W;
ii. als unwillkürliche Bewegungen werden a priori alle Fälle von Kurven betrachtet, die kurzer sind als ein vordefinierter, geeignet festgelegter Schwellenwertparameter X;
iii. unterscheiden zwischen willkürlichen und unwillkürlichen Bewegungsaktivitäten unter Verwendung von Daten, die von Beschleunigungsmessern, Gyroskopen oder Magnetometern stammen, beispielsweise mittels induktiver Algorithmen;
iv. im Falle einer einem Pfad Pij entsprechenden willkürlichen Bewegung, Betrachten dieser als einzigartiger Pfad und nicht in Beziehung zu irgendeinem Pfad vom Typ Pik und Pkj, wobei k von i und j verschieden ist, und wobei der entsprechende PIk, der ein Punkt von Interesse in dem Satz aller Punkte von Interesse in der genannten Umgebung ist, einem einfachen gelegentlichen Kreuzungspunkt entspricht, wobei ein Pfad P eine beliebige Kurve im Raum ist, die zwei Punkte von Interesse PIi und PIj in dem Satz aller Punkte von Interesse in der besagten Umgebung verbindet, wobei i und j verschieden sind, und folgende Eigenschaften erfüllt:
- Einhaltung der baulichen Einschränkungen in Bezug auf die bebaute Umgebung, in der der topologische Lokalisierungsprozess stattfindet, wobei beispielsweise die Kurve nicht durch Wände oder andere bauliche Hindernisse zwischen Bereichen und/oder Flächen und/oder Räumen verlaufen darf;
- Stückweise Regelmäßigkeit, bei der die Kurve gemäß der gängigen Definition keine Spitzen- oder Eckpunkte aufweist;
- Minimalität der Länge, für die, vorausgesetzt L die Länge einer Kurve und L0 eine vordefinierte Länge einer idealen Kurve zwischen PIi und PIj ist, sodass der Verlauf dieser idealen Kurve die in den Punkten a) und b) angegebenen Eigenschaften erfüllt, die Differenz zwischen L und L0 kleiner als ein a priori definierbarer Schwellenwert sein muss;
v. im Falle einer willkürlichen Bewegungsaktivität, Erkennen eines Pfades innerhalb der bebauten Umgebung durch Vergleich von die Geschwindigkeit der Positionsänderung und/oder die Geschwindigkeit der Richtungsänderung umfassenden Differentialbewegungsparametern mit Ausführungsmodellen willkürlicher Bewegungsaktivitäten in einer Vielzahl vordefinierter Pfade in derselben bebauten Umgebung.

10. Verfahren nach Anspruch 9, wobei ein Schritt zur benutzerdefinierten Anpassung der Ausführungsmodelle für willkürliche Bewegungsaktivitäten durch eine Trainings- oder Kalibrierungsphase vorgesehen ist, in dem Informationen über die Besonderheiten der Differentialbewegung der Person oder des von einer oder mehreren Personen bewegten Objekts, deren Position zu ermitteln ist, entsprechend den Bedingungen des üblichen Verhaltens bei der Verfolgung eines bestimmten Pfades gesammelt werden, wobei ein Klassifizierungsalgorithmus in Form eines induktiven oder deduktiven Algorithmus verfügbar ist, der auf einem neuronalen Netzwerk oder einer anderen Approximation basiert und in der Lage ist, Lernzyklen während laufenden Verwendung auszuführen.

11. Verfahren nach Anspruch 9 oder 10, wobei der induktive Algorithmus entweder interne Umweltreferenzen oder externe Referenzen zur Durchführung einer Trilateration oder Multilateration wie in bekannten Systemen verwendet, um die Genauigkeit des Lokalisierungsverfahrens zu verbessern.

## Revendications

1. Système de localisation d'une personne ou d'un objet déplacé par une ou plusieurs personnes dans un environnement bâti, lequel système comprend au moins un capteur différentiel (S1, S1', S2) pour détecter les mouvements différentiels de telle personne ou de tel objet (A10, A20) dans ledit environnement,
dans lequel ledit système de localisation comprend:
- au moins une unité de transmission (T3) des informations de mouvement différentiel détectées par l'au moins un capteur couplé mécaniquement à telle personne ou tel objet;
- au moins une unité de réception (R4) des informations de mouvement différentiel transmises par cette unité de transmission (T3);
- au moins une unité de traitement (E5) comprenant un programme dans lequel sont encodées les instructions pour réaliser une classification desdites informations de mouvement différentiel par rapport à une action de mouvement volontaire ou à une action involontaire, rendant donc ladite unité de traitement (E5) appropriée pour effectuer la classification susmentionnée, où cette classification est prévue en association avec la reconnaissance d'un chemin à l'intérieur dudit environnement en comparant des paramètres de mouvement différentiel, comprenant la vitesse de changement de position ou la vitesse de changement de direction, avec des modèles d'exécution d'activités de mouvement volontaire dans une pluralité de chemins prédéfinis dans le même environnement bâti
la reconnaissance de la présence d'activités de mouvement volontaire étant effectuée en:
- considérant a priori comme mouvements involontaires toutes les instances de courbes dans lesquelles la vitesse de changement de position et/ou la vitesse de changement de direction est/sont inférieure(s) à un paramètre seuil prédéfini W et défini de manière appropriée;
- considérant a priori comme mouvements involontaires toutes les instances de courbes plus courtes qu'un certain paramètre seuil X prédéfini et défini de manière appropriée;
- distinguant entre activités de mouvement volontaire et de mouvement involontaire en utilisant des données provenant d'accéléromètres, de gyroscopes ou de magnétomètres, par exemple au moyen d'algorithmes inductifs;
- dans le cas d'un déplacement involontaire correspondant à un chemin Pij, considérant ce Pij comme un chemin unique et non relatif à des chemins quelconques du type Pik et Pkj, où k est distinct de i et de j, et que le PIk correspondant, qui est un point d'intérêt dans l'ensemble de tous les points d'intérêt dudit environnement, correspond à un simple point de croisement occasionnel,
dans lequel un chemin P est toute courbe dans l'espace reliant deux points d'intérêt PIi et PIj dans l'ensemble de tous les points d'intérêt dudit environnement, avec i et j distincts, et qui satisfait les caractéristiques suivantes:
a) respect des contraintes structurelles liées à l'environnement bâti dans lequel se déroule le processus de localisation, pour lequel, par exemple la courbe ne peut pas traverser des parois ou d'autres obstacles structurels entre des zones et/ou des surfaces et/ou des pièces;
b) régularisation par morceaux, pour laquelle la courbe n'a ni points de rebroussement ni points d'angle selon la définition courante
c) minimalité de la longueur, pour laquelle L étant la longueur d'une courbe et L0 étant une longueur prédéfinie d'une courbe idéale entre PIi et PIj, telle que le chemin de cette courbe idéale satisfasse les propriétés mentionnées aux points a) et b), il en résulte que la différence entre L et L0 doit être inférieure à un seuil définissable a priori;
- dans le cas d'une activité de mouvement volontaire, reconnaissance d'un chemin à l'intérieur de l'environnement bâti en comparant les paramètres de mouvement différentiel, comprenant la vitesse de changement de position et/ou la vitesse de changement de direction, avec des modèles d'exécution d'activités de mouvement volontaire dans une pluralité de chemins prédéfinis dans le même environnement bâti.

2. Système selon la revendication 1, dans lequel au moins un ensemble correspondant d'un ou plusieurs paramètres de mouvement différentiel est/sont associé(s) audit chemin dans une séquence appropriée, comprenant la vitesse de changement de position le long du chemin et/ou la vitesse de changement de direction le long du chemin.

3. Système selon les revendications 1 et 2, dans lequel les modèles d'exécution des activités de mouvement volontaire sont personnalisée à la suite d'une étape d'apprentissage ou de calibration dans laquelle des informations sont acquises en fonction des particularités du mouvement différentiel de la personne ou de l'objet déplacé par une ou plusieurs personnes dont la position doit être déterminée, correspondant aux conditions de comportement habituel lors du déplacement le long d'un chemin spécifique, un algorithme de classification étant disponible sous forme d'algorithme inductif ou déductif basé sur un réseau neuronal ou d'autre algorithmes d'approximation capables d'exécuter des cycles d'apprentissage pendant l'utilisation actuelle.

4. Système selon l'une quelconque des revendications précédentes, dans lequel au moins un capteur différentiel est couplé à la personne ou à l'objet déplacé par une ou plusieurs personnes à localiser à l'intérieur de l'environnement bâti et dans lequel ledit au moins un capteur différentiel est un accéléromètre, un gyroscope, un magnétomètre, capable de fournir des informations de mouvement différentiel, et/ou dans lequel ledit au moins un capteur différentiel est associé à un capteur environnemental et/ou biométrique comprenant des capteurs de température, de fréquence cardiaque ou d'autre capteurs biométriques.

5. Système selon l'une ou plusieurs des revendications précédentes, dans lequel la présence de mouvements est reconnue en comparant la vitesse de changement de position et/ou la vitesse de changement de direction provenant d'au moins un capteur avec un ou plusieurs paramètres, c.à.d. paramètres seuil ou indicateurs.

6. Système selon la revendication 5, dans lequel une activité de mouvement volontaire est reconnue en analysant des données résultant des accéléromètres, des gyroscopes, des magnétomètres en les comparant avec des modèles d'exécution des activités de mouvement volontaire dans une pluralité de chemins prédéfinis dans l'environnement bâti.

7. Système selon l'une ou plusieurs des revendications précédentes, dans lequel des données résultant de l'au moins un capteur liées à la vitesse de changement de position et/ou à la durée de tel changement et/ou à la vitesse de changement de direction et/ou à la durée de tel changement sont analysées avec des algorithmes inductifs, notamment basés sur des réseaux neuronaux, et spécifiquement des réseaux neuronaux récurrents, afin de détecter des activités de mouvement volontaire.

8. Système selon l'une quelconque des revendications précédentes, dans lequel l'unité de traitement (E5) est configurée pour représenter une carte topologique de l'environnement dans lequel il est nécessaire d'effectuer le processus de localisation d'une personne ou d'un objet déplacé par une ou plusieurs personnes, telle carte étant constituée d'un ensemble de points d'intérêt correspondant à des zones, des surfaces ou des pièces.

9. Méthode de localisation de personnes et/ou d'objet déplacés par une ou plusieurs personnes dans un environnement bâti, chaque personne ou objet étant associé à au moins un capteur de détection de mouvement différentiel de telle personne ou de tel objet dans ledit environnement et **caractérisée en ce qu'**elle comprend les étapes suivantes:
a) détection d'un mouvement différentiel par au moins un capteur couplé mécaniquement à telle personne ou à tel objet;
b) transmission d'un signal contenant telles informations de mouvement différentiel par un une unité de transmission;
c) réception du signal émis par l'unité de transmission;
d) traitement des informations de mouvement différentiel reçues;
e) reconnaissance de la présence d'une activité de mouvement différentiel par rapport à un mouvement involontaire basée sur un ou plusieurs paramètres seuils ou indicateurs en:
i. considérant a priori comme mouvements involontaires toutes les instances de courbes dans lesquelles la vitesse de changement de position et/ou la vitesse de changement de direction est/sont inférieure(s) à un paramètre seuil prédéfini W et défini de manière appropriée;
ii. considérant a priori comme mouvements involontaires toutes les instances de courbes plus courtes qu'un certain paramètre seuil X prédéfini et défini de manière appropriée;
iii. distinguant entre activités de mouvement volontaire et de mouvement involontaire en utilisant des données provenant d'accéléromètres, de gyroscopes ou de magnétomètres, par exemple au moyen d'algorithmes inductifs;
iv. dans le cas d'un déplacement involontaire correspondant à un chemin Pij, considérant ce Pij comme un chemin unique et non relatif à des chemins quelconques du type Pik et Pkj, où k est distinct de i et de j, et que le PIk correspondant, qui est un point d'intérêt dans l'ensemble de tous les points d'intérêt dans ledit environnement, correspond à un simple point de croisement occasionnel, dans lequel un chemin P est toute courbe dans l'espace reliant deux points d'intérêt PIi et PIj dans l'ensemble de tous les points d'intérêt dudit environnement, avec i et j distincts, et qui satisfait les caractéristiques suivantes:
- respect des contraintes structurelles liées à l'environnement bâti dans lequel se déroule le processus de localisation topologique, pour lequel, par exemple la courbe ne peut pas traverser des parois ou d'autres obstacles structurels entre des zones et/ou des surfaces et/ou des pièces;
- régularisation par morceaux, pour laquelle la courbe n'a ni points de rebroussement ni points d'angle selon la définition courante;
- minimalité de la longueur, pour laquelle L étant la longueur d'une courbe et L0 étant une longueur prédéfinie d'une courbe idéale entre PIi et PIj, telle que le chemin de cette courbe idéale satisfasse les propriétés mentionnées aux points a) et b), il en résulte que la différence entre L et L0 doit être inférieure à un seuil définissable a priori;
v. dans le cas d'une activité de mouvement volontaire, reconnaissance d'un chemin à l'intérieur de l'environnement bâti en comparant paramètres de mouvement différentiel, comprenant la vitesse de changement de position et/ou la vitesse de changement de direction, avec des modèles d'exécution d'activités de mouvement volontaire dans une pluralité de chemins prédéfinis dans le même environnement bâti.

10. Méthode selon la revendication 9, dans laquelle une étape de personnalisation des modèles d'exécution des activités de mouvement volontaire est prévue à travers une étape d'apprentissage ou de calibration dans laquelle des informations sont recueillies en fonction des particularités du mouvement différentiel de la personne ou de l'objet déplacé par une ou plusieurs personnes dont la position topologique doit être déterminée, correspondant aux conditions de comportement habituel en suivant un certain chemin, un algorithme de classification étant disponible sous forme d'algorithme inductif ou déductif basé sur un réseau neuronal ou une autre approximation capable d'exécuter des cycles d'apprentissage pendant l'utilisation actuelle.

11. Méthode selon les revendications 9 ou 10, dans laquelle ledit algorithme inductif utilise soit des références environnementales internes soit des références externes pour effectuer une tri-latération ou une multi-latération, comme dans des systèmes connus, pour améliorer la précision de la procédure de localisation.
